# EUROPEAN PATENT APPLICATION

(11) **EP 3 954 578 A1**
(43) Date of publication of application: **16.02.2022**
(21) Application number: 21191072.4
(22) Date of filing: 12.08.2021
(51) Int. Cl.: B60P 3/00, B66F 9/18, B66F 9/10

(54) **SELF-PROPELLED VEHICLE FOR HANDLING GLASS-SHEET CONTAINERS**

(30) Priority: 12.08.2020 IT 202000020071
(71) Applicant: ITALCARRELLI S.p.A., 36072 Chiampo (VI) (IT)
(72) Inventor: NEGRIN, Alessandro, 36072 CHIAMPO (VI) (IT)
(74) Representative: Bellemo, Matteo

(57) **Abstract**

A self-propelled electric vehicle (1) for handling glass-sheet rigid containers (100) comprising: a supporting body (3) which is provided with a plurality of ground-resting wheels (2); a vertical upright (5) which extends cantilevered from the supporting body (3) in a substantially vertical direction, and is firmly fixed to the supporting body (3) with the capability of moving horizontally over the supporting body (3) along a path that is substantially rectilinear and parallel to the vehicle longitudinal axis (L); a first actuator assembly (6) which is adapted to move, on command, the vertical upright (5) over the supporting body (3) from and towards a forward position in which the vertical upright (5) is located at the outer edge of the supporting body (3); a gripping equipment (7) which is adapted to fork one or more glass-sheet rigid containers (100) at a time, is fixed to the vertical upright (5) with the capability of moving along the same vertical upright (5), and juts out cantilevered outside of the vehicle when the vertical upright (5) is in the forward position; and a second actuator assembly (8) which is adapted to move, on command, the gripping equipment (7) along the vertical upright (5).

## Description

### CROSS-REFERENCE TO RELATED APPLICATIONS

This patent application claims priority from Italian patent application no. 102020000020071 filed on 12/08/2020.

### TECHNICAL FIELD

The present invention relates to a self-propelled vehicle for handling glass-sheet containers.

More specifically, the present invention relates to a self-propelled vehicle for handling rigid containers for rectangular glass sheets of large dimensions, to which the following disclosure will explicitly refer without however losing generality.

### BACKGROUND ART

As is known, in some cases glass sheets of large dimensions are stored inside suitable rigid containers having a box-like structure, which allow safely handling and/or shipping small packages of glass sheets.

More specifically, these glass-sheet rigid containers basically consist of a large self-supporting rigid rectangular frame, which is usually made of wooden boards with suitable thickness, and has a given thickness (generally about 20 cm) sufficient to accommodate inside itself a small package/number of glass sheets in vertical position.

The self-propelled vehicles which are used for handling these rigid box-like containers for glass sheets generally comprise: a roughly rectangular-shaped, rigid self-supporting body which is provided with four ground-resting wheels, and has in the upper part a large horizontal loading deck, on which the glass-sheet rigid containers rest during transport; a vertical upright which extends cantilevered from the body in a substantially vertical direction, and is firmly fixed to the body with the capability of moving parallel to itself and to the vehicle longitudinal axis, along a rectilinear path that crosses the loading deck; a first linear actuator which is able to move, on command, the vertical upright forwards and backwards over the body, between a forward position in which the vertical upright is located flush with the outer edge of the self-supporting body, and a rearward position in which the vertical upright is located approximately in the centre of the body, behind the large supporting plane; a gripping equipment which is fixed cantilevered on the side of the vertical upright with the capability of moving along the vertical upright, parallel to the longitudinal axis of the latter; and a second linear actuator which is able to move, on command, the gripping equipment along the vertical upright so as to vary at will the height of the gripping equipment from the ground.

The gripping equipment, in turn, is structured so as to be able to fork the glass-sheet rigid container, abutting against two large protruding shoulders that are suitably made on the two vertical sides of the rectangular self-supporting frame of the glass-sheet container.

More specifically, the gripping equipment comprises: a large self-supporting crossbeam which extends horizontally and perpendicularly to the vehicle longitudinal axis, and is arranged flush with one of the two larger faces of the glass-sheet box-like rigid container in vertical position; and two rectilinear prongs that protrude cantilevered from the two ends of the self-supporting crossbeam, while remaining perpendicular to the beam longitudinal axis and parallel to the vehicle longitudinal axis.

When the horizontal self-supporting crossbeam of the gripping equipment is arranged flush with one of the two larger faces of the box-like glass-sheet rigid container in vertical position, the two prongs arrange flush with the two vertical sides of the rectangular frame of the container, directly underneath the shoulders, so as to abut underneath the shoulders when the gripping equipment is lifted and brought to the maximum distance from the ground.

Additionally, in the more modern self-propelled vehicles the self-supporting crossbeam of the gripping equipment has a length adjustable on command, so as to be able to draw the two prongs close to the two vertical sides of the rectangular frame of the rigid container, only when the self-supporting crossbeam is aligned and flush with the larger face of the glass-sheet rigid container. In this way, the approaching manoeuvres to the glass-sheet rigid container are remarkably simplified and quickened.

Obviously, the two prongs are fixed in rigid manner to the two ends of the self-supporting crossbeam, and usually have a length such as to be able to simultaneously fork up to a maximum of eight glass-sheet rigid containers.

Clearly, this constructive choice limits the manoeuvrability of the self-propelled vehicle in narrow spaces, and in some cases it can create problems during the approaching manoeuvres to the glass-sheet rigid container(s).

The longer are the prongs, the greater is the risk that, during the approaching manoeuvres to the glass-sheet container, one of the prongs can slam against the container damaging the glass sheets.

In addition, since the glass-sheet containers are generally stored in vertical position, closely adjoined to each other, the picking up of a single glass-sheet container can cause the overturning of the self-propelled vehicle. In this case, in fact, the shoulders of the glass-sheet container have to abut on the ends of the two prongs, hence, if the two prongs are very long, the lifting of the glass-sheet container can dangerously unbalance the vehicle.

### DISCLOSURE OF INVENTION

Aim of the present invention is to realize a gripping equipment that can overcome the above-described operating limits.

In accordance with these aims, according to the present invention there is provided a self-propelled vehicle for handling glass-sheet containers as specified in Claim 1 and preferably, though not necessarily, in any one of the claims depending thereon.

### BRIEF DESCRIPTION OF THE DRAWINGS

The present invention will now be described with reference to the accompanying drawings, which illustrate a non-limiting example embodiment thereof, wherein:
- Figure 1 is a perspective view of a self-propelled vehicle for handling glass-sheet containers realized according to the teachings of the present invention, with parts removed for clarity's sake;
- Figures 2 and 3 are two perspective views of the self-propelled vehicle illustrated in Figure 1, in two different functioning positions and with parts removed for clarity's sake;
- Figure 4 is a perspective view on an enlarged scale of the gripping equipment of the self-propelled vehicle shown in the previous figures, with parts removed for clarity's sake;

- Figure 5 is a perspective view of a part of the gripping equipment illustrated in Figure 4, with parts removed for clarity's; whereas
- Figure 6 is a side view of the self-propelled vehicle illustrated in Figure 1, during the functioning and with parts removed for clarity's sake.

### BEST MODE FOR CARRYING OUT THE INVENTION

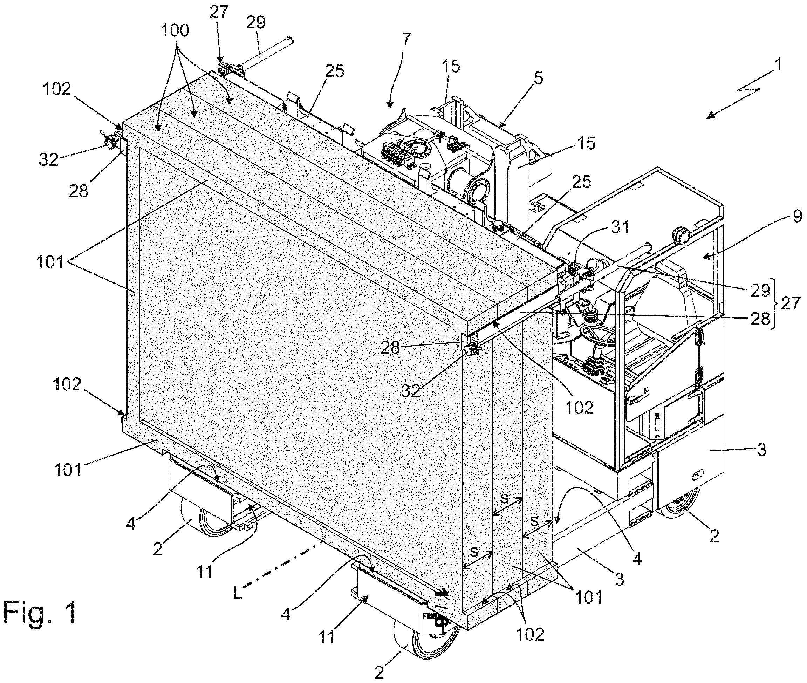

With reference to Figures 1, 2 and 3, reference number 1 denotes, as a whole, a self-propelled vehicle specifically structured for handling, inside a general shed, warehouse, plant or other work area, single or groups of rigid containers 100 for glass sheets of large dimensions, arranged in a substantially vertical position closely adjoined to one another.

In other words, the self-propelled vehicle 1 is structured so as to be able to fork, lift, horizontally move and finally lay again on the ground single or small groups of glass-sheet rigid containers 100 in vertical position, closely adjoined to one another.

Each glass-sheet rigid container 100, in particular, has a box-like structure and comprises a rigid and self-supporting, large rectangular frame 101 which is preferably made of wooden boards, and has a given nominal thickness s sufficient to accommodate inside itself a single glass sheet or a small package of glass sheets rectangular in shaped, in substantially vertical position.

Clearly, the glass-sheet rigid containers 100 can also be used for protecting and handling in safety marble slabs or the like.

Being an equipment known and easy to find in any plant for production of glass sheets, the glass-sheet rigid containers 100 will not be further described.

With reference to Figures 1, 2 and 3, the self-propelled vehicle 1 is provided with a plurality of preferably driving and/or steering, ground-resting wheels 2, and comprises: a rigid supporting body 3 which rests on the ground by means of the wheels 2 and is preferably superiorly provided with a large, substantially horizontal, loading deck 4, on which the rigid containers 100 temporarily rest during transport; a substantially rectilinear, vertical upright 5 which extends cantilevered from the supporting body 3 in a substantially vertical direction, and is firmly fixed onto the supporting body 3 with the capability of moving horizontally over the supporting body 3 along a path that is substantially rectilinear and substantially parallel to the vehicle longitudinal axis L, preferably while remaining always substantially parallel to itself; and a first, preferably hydraulically operated, actuator assembly 6 which is able to move, on command, the vertical upright 5 forwards and backwards on supporting body 3.

More in detail, the vertical upright 5 is firmly fixed to the supporting body 3 with the capability of freely moving on the supporting body 3 in a direction d₁ substantially perpendicular to the upright longitudinal axis and substantially parallel to the vehicle longitudinal axis L.

In addition, the vertical upright 5 is preferably adapted to move on supporting body 3 from one side to the other of the loading deck 4. In other words, the vertical upright 5 moves on supporting body 3 along a rectilinear path that crosses the loading deck 4.

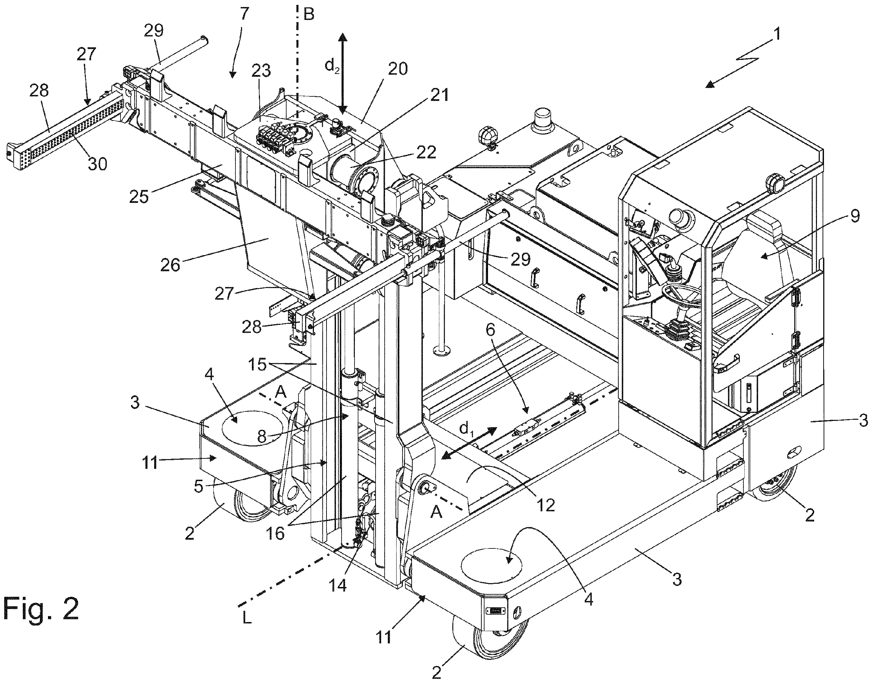

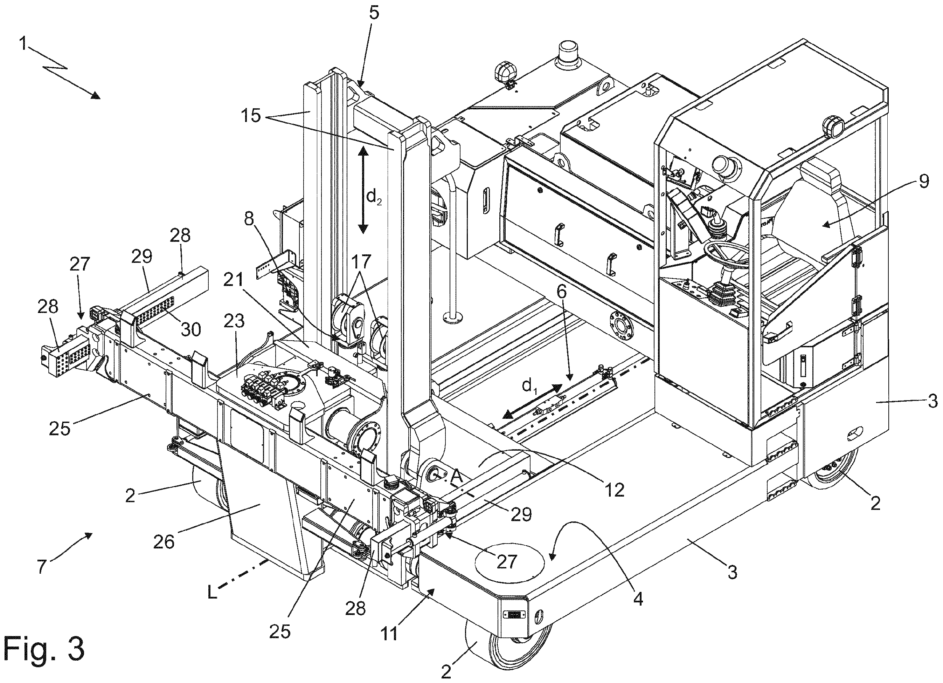

The actuator assembly 6, in turn, is preferably adapted to move, on command, the vertical upright 5 forwards and backwards on supporting body 3 in the direction di, between a forward position (see Figures 2 and 3) in which the vertical upright 5 is located at the outer edge of the supporting body 3; and a rearward position (see Figure 1) in which the vertical upright 5 is located approximately in the centre of supporting body 3, behind the loading deck 4.

Moreover, the self-propelled vehicle 1 additionally comprises: a gripping equipment 7 which is structured so as to be able to fork one or more rigid containers 100 at a time, and is fixed on the lateral side of the vertical upright 5 with the capability of moving along the vertical upright 5 parallel to the longitudinal axis of the latter, and so as to jut out cantilevered outside of the vehicle when the vertical upright 5 is in the forward position (see Figures 2 and 3); and a second, preferably hydraulically operated, actuator assembly 8 which is able to move, on command, the gripping equipment 7 along the vertical upright 5, so as to vary at will the height of the gripping equipment 7 from the ground.

More specifically, the gripping equipment 7 is mounted in slidable manner on the vertical upright 5 so as to move up and down along the vertical upright 5 in a direction d₂ substantially parallel to the upright longitudinal axis, preferably substantially for the entire height/length of the same upright.

The actuator assembly 8, in turn, is preferably adapted to move the gripping equipment 7 along the vertical upright 5, between a first operating position (see Figure 2) in which the gripping equipment 7 is substantially at the top of the vertical upright 5, at the possible maximum distance from the ground; and a second operating position (see Figure 3) in which the gripping equipment 7 is substantially at the base of the vertical upright 5, at the possible minimum distance from the ground.

Clearly, the actuator assembly 8 is able to place the gripping equipment 7 on the vertical upright 5, in any intermediate position between the first and the second operating position.

In addition, the loading deck 4 is preferably located on the front part of supporting body 3, and the self-propelled vehicle 1 is preferably additionally provided with a driver's cab 9 which is located on the rear part of supporting body 3, and is adapted to accommodate the driver of the vehicle (i.e. the person driving the self-propelled vehicle 1).

In other words, the driver's cab 9 is preferably located on supporting body 3, behind the loading deck 4, and preferably accommodates inside itself the steering wheel, the hand lever that controls the rotation speed of the wheels 2 and the other manually-operated control members necessary for driving the self-propelled vehicle 1.

As an alternative, the driver's cab 9 could also be placed above the gripping equipment 7 so as to have a better view.

With reference to Figures 1, 2 and 3, in the example shown, in particular, the supporting body 3 preferably has a substantially horseshoe-shaped structure.

More in detail, the front part of supporting body 3 is preferably provided with two protruding rectilinear beams 11 which extend cantilevered substantially parallel to the ground, one spaced beside the other on opposite sides of and substantially parallel to the vehicle longitudinal axis L. Preferably, the two rectilinear beams 11 are moreover arranged in a substantially specular position on opposite sides of the vehicle vertical midplane.

Preferably, the loading deck 4 of supporting body 3 is furthermore located on the front/distal ends of the two protruding longitudinal beams 11 of supporting body 3.

In other words, the front part of supporting body 3 is preferably provided with a large rectilinear slit, which extends parallel to the vehicle longitudinal axis L, i.e. in direction di, is open at the front and intersects the loading deck 4. The large rectilinear slit of supporting body 3 is furthermore arranged astride of the vertical midplane of the vehicle.

Preferably, the supporting body 3 moreover rests on the ground by means of a plurality of pivoting ground-resting wheels 2 that are arranged in pairs on opposite sides of the vehicle longitudinal axis L, preferably in a substantially specular position on opposite sides relative to the vertical midplane of the vehicle.

More in detail, the self-propelled vehicle 1 is preferably provided with a first pair of preferably idle and pivoting, ground-resting wheels 2 that are located at the front/distal ends of the two protruding beams 11 of the supporting body 3, preferably vertically aligned with the loading deck 4; and/or with a second pair of preferably driving and pivoting, ground-resting wheels 2 that, on the other hand, are located beneath the rear part of supporting body 3, preferably vertically aligned with the driver's cab 9.

Preferably, the two wheels 2 of the second pair of ground-resting wheels 2 are moreover driven into rotation each by a respective electric or hydraulic motor (not illustrated).

With reference to Figures 1, 2 and 3, the vertical upright 5, on the other hand, is preferably butt fixed onto a large movable slide 12, which is accommodated in the rectilinear slit laterally delimited by the two protruding beams 11, and is fixed in slidable manner to both beams 11 so as to be able to move in the rectilinear slit parallel to the vehicle longitudinal axis L, i.e. in direction di, preferably substantially for the entire length of the rectilinear slit.

The actuator assembly 6, in turn, preferably comprises at least one double-acting hydraulic cylinder 13, which extends parallel to the vehicle longitudinal axis L, i.e. in direction d₁, preferably inside the rectilinear slit laterally delimited by the two protruding beams 11, and has the two ends fixed one on the supporting body 3 and the other on the movable slide 12, so as to be able to move the movable slide 12 forwards and backwards along the two longitudinal beams 11 of supporting body 3.

More in detail, the actuator assembly 6, or rather the hydraulic cylinder 13, is preferably able to displace the movable slide 12 along the two longitudinal beams 11 of supporting body 3, between a forward position (see Figures 2 and 3) in which the movable slide 12 is located at the front end of the rectilinear slit delimited by the two beams 11 of supporting body 3; and a rearward position in which the movable slide 12 is located at the rear end of the same slit.

Clearly, the hydraulic cylinder(s) 13 could be replaced, for example, by pneumatic cylinders or by electrically-operated linear actuators.

With particular reference to Figure 2, in addition the vertical upright 5 is preferably located astride of the vehicle longitudinal axis L and of the vehicle vertical midplane, and is preferably pivoted to the movable slide 12 so as to be able to rotate about a transversal reference axis A which is substantially horizontal and perpendicular to the vehicle longitudinal axis L, i.e. substantially perpendicular to the vehicle vertical midplane.

Preferably, the self-propelled vehicle 1 is moreover provided with a preferably hydraulically-operated, adjustment assembly 14 that is interposed between the movable slide 12 and the vertical upright 5, and is able to rotate by a few degrees the vertical upright 5 about the transversal axis A, so as to vary/adjust, on command, the inclination angle of the vertical upright 5 with respect to the vertical.

With reference to Figures 2, 3 and 4, in addition the vertical upright 5 preferably has a lattice structure that comprises two main rectilinear rods 15 with a length preferably greater than 2 m (metres), which extend one spaced beside the other on opposite sides of and parallel to the upright longitudinal axis, i.e. in direction d₂.

Furthermore, in the illustrated example, the two main rectilinear rods 15 are preferably additionally arranged in a substantially specular position on opposite sides of the vehicle vertical midplane.

The gripping equipment 7 is preferably fixed in axially slidable manner on the two rectilinear rods 15 of the vertical upright 5.

The actuator assembly 8, on the other hand, preferably comprises a pair of single-acting or double-acting hydraulic cylinders 16, which extend parallel to the longitudinal axis of the vertical upright 5, i.e. in the direction d₂, on opposite sides of the longitudinal axis of the vertical upright 5, preferably in the oblong space laterally delimited by the two rectilinear rods 15 of the lattice structure.

Preferably, each hydraulic cylinder 16, additionally, has the outer tubular barrel fixed in rigid manner to the base of the vertical upright 5.

Additionally, the actuator assembly 8 preferably comprises, for each hydraulic cylinder 16: a return pulley 17 fixed in free rotatable manner on the free end of the movable piston-rod of hydraulic cylinder 16; and an open drive chain (not visible in the figures), which is U-bent and is saddle-fitted on the return pulley 17 at the bend, so that the two rectilinear branches thereof are arranged on opposite sides of the movable stem of the hydraulic cylinder 16.

The drive chain furthermore has a first end firmly fixed to the vertical upright 5 or to the outer tubular barrel of hydraulic cylinder 16, and a second end firmly fixed to the gripping equipment 7, so that the movements of the movable piston-rod of hydraulic cylinder 16 can move the gripping equipment 7 along the two rectilinear rods 15 of the vertical upright 5.

With reference to Figures from 1 to 6, the gripping equipment 7, in turn, is preferably arranged astride of the vertical midplane of the vehicle, and is structured so as to be able to fork one or more glass-sheet rigid containers 100, abutting on suitable protruding shoulders 102 that are specifically provided on the two vertical sides/flanks of the rigid container(s) 100, or rather of the rectangular frame 101, preferably close to the upper and lower vertexes of the rectangular frame 101.

The gripping equipment 7 first of all comprises a main slide 20 which is fixed to the vertical upright 5, or rather to the two rectilinear rods 15 of vertical upright 5, with the capability of freely sliding along the vertical upright 5 parallel to the upright longitudinal axis, i.e. in direction d₂. The actuator assembly 8 is preferably adapted to move the main slide 20 along the vertical upright 5.

Additionally, the gripping equipment 7 preferably comprises: an auxiliary slide 21 which is firmly fixed to the main slide 20 with the capability of sliding along the same main slide 20 in a direction d₃ substantially horizontal and perpendicular to the vehicle longitudinal axis L; and a preferably hydraulically-operated, first adjustment assembly (not shown in the figures) which is interposed between the main slide 20 and the auxiliary slide 21, and is adapted to vary the position of the auxiliary slide 21 along the main slide 20.

More specifically, in the illustrated example, the auxiliary slide 21 is preferably fitted in axially slidable manner on a pair of big transversal cylindrical pins 22 which extend horizontally one spaced above the other, astride of and perpendicular to the vehicle vertical midplane, and have the two ends firmly anchored to the main slide 20.

With reference to Figures 2, 3, 4 and 5, preferably the gripping equipment 7 moreover comprises also: a swivelling head 23 which is firmly fixed to the auxiliary slide 21 with the capability of swivelling relative to the auxiliary slide 21 about a reference axis B that is substantially parallel to the longitudinal axis of the vertical upright 5, i.e. substantially parallel to direction d₂ and perpendicular to direction d₃; and a preferably hydraulically-operated, second adjustment assembly 24 which is interposed between the auxiliary slide 21 and the swivelling head 23, and is adapted to rotate the swivelling head 23 about the axis B, so as to be able to vary, on command, the angular position of the head 23 relative to the auxiliary slide 21 and, consequently, relative to the main slide 20 and to the vertical upright 5.

In other words, the swivelling head 23 is able to rotate/swivel about a substantially vertical axis B, and the adjustment assembly 24 is adapted to rotate the swivelling head 23 about axis B so as to vary the orientation/ inclination of the head 23 with respect to the vehicle longitudinal axis L.

In the illustrated example, in particular, the swivelling head 23 is firmly fixed to the auxiliary slide 21 preferably with the capability of rotating relative to the vehicle longitudinal axis L up to a maximum of 10° clockwise and counter-clockwise.

With reference to Figures 2, 3, 4 and 5, the gripping equipment 7 additionally comprises: a large transversal supporting beam 25 with a substantially rectilinear structure, which is firmly fixed on the swivelling head 23 in a position substantially horizontal and perpendicular to the vehicle longitudinal axis L, so as to jut out cantilevered from both sides of the swivelling head 23, and is adapted to be arranged flush with one of the two larger faces of the glass-sheet rigid container 100 to be transported; and preferably also a central plate-like element 26 which is firmly fixed to the swivelling head 23, beside the central part of the transversal supporting beam 25, preferably so as to be slightly tilted with respect to the vertical in order to progressively move away from the larger face of the glass-sheet rigid container 100 to be transported.

The transversal supporting beam 25 thus juts out cantilevered from both sides of the vertical upright 5.

Furthermore, the gripping equipment 7 additionally comprises two lateral prongs 27 that are located at the two ends of the transversal supporting beam 25, and are adapted to jut out cantilevered from the transversal supporting beam 25 so as to abut against the protruding shoulders 102 located on the sides of each rigid container 100, underneath the same shoulders.

The gripping equipment 7 is thus provided with a forked structure which is adapted to fork the rigid container(s) 100 abutting frontally against the upper side of the frame 101 and laterally against the protruding shoulders 102, and which is fixed to the vertical upright 5 so as to protrude cantilevered from the vertical upright 5 beyond the perimeter of the supporting body 3 when the vertical upright 5 is in the forward position (see Figures 2 and 3).

Preferably, the transversal supporting beam 25 moreover has a length-adjustable structure, so as to be able to vary, on command, the distance between the two lateral prongs 27.

More specifically, the transversal supporting beam 25 is preferably structured so as to be able to vary the length thereof between a minimum value preferably equal to 2 metres and a maximum value preferably equal to 3,5 metres.

In the illustrated example, in particular, the transversal supporting beam 25 has a telescopic structure that preferably comprises: a rectilinear central segment 25a which preferably has a square-sectioned tubular structure, and is firmly fixed to the swivelling head 23 preferably above the plate-like element 26; and two rectilinear lateral segments 25b which are inserted in angularly rigid and axially slidable manner into the two ends of the rectilinear central segment 25a, and support each a respective lateral prong 27.

In other words, the rectilinear central segment 25a is adjacent to and aligned with the vertical upright 5, whereas the two rectilinear lateral segments 25b jut out cantilevered on the sides of the vertical upright 5.

Preferably, the gripping equipment 7 is furthermore provided with a preferably hydraulically-operated, first actuator device (not visible in the figures) which is able to vary, on command, the length of the transversal supporting beam 25.

More specifically, the first actuator device is preferably accommodated inside the supporting beam 25, and is able to axially move the two rectilinear lateral segments 25b relative to the rectilinear central segment 25a, so as to vary, on command and at will, the length of the portion of the two rectilinear lateral segments 25b of the beam that protrude cantilevered from opposite sides of the rectilinear central segment 25a.

Preferably, the gripping equipment 7 moreover also includes a linear transducer (not shown in the figures) which is able to determine/measure the length of the transversal supporting beam 25 and thus the distance between the two lateral prongs 27.

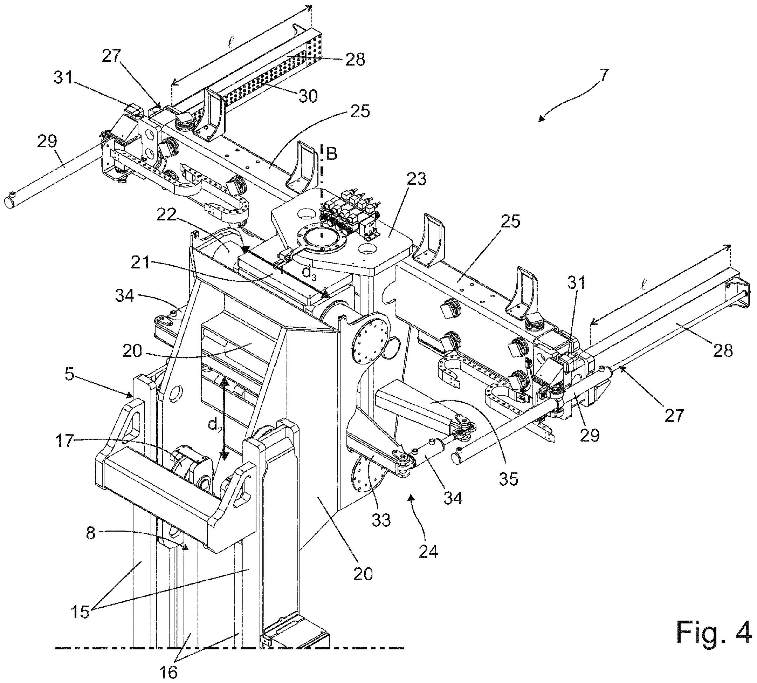

With particular reference to Figures 3 and 4, each lateral prong 27 in turn comprises: a rectilinear bar 28 of given length and preferably with a rectangular section, which is separated and distinct from the transversal supporting beam 25, extends horizontally and perpendicularly to the longitudinal axis of supporting beam 25, and is fixed in rigid manner to the end of the transversal supporting beam 25, or rather to the rectilinear lateral segment 25b, with the capability of freely moving forwards and backwards parallel to its longitudinal axis, i.e. perpendicularly to the transversal supporting beam 25; and a preferably hydraulically-operated, second actuator device 29 which is able to move, on command, the rectilinear bar 28 forwards and backwards relative to the end of the transversal supporting beam 25, so as to vary the length ℓ of the segment of the rectilinear bar 28 that juts out cantilevered from the front side of the transversal supporting beam 25.

The rectilinear bar 28 is adapted to abut against the protruding shoulder 102 of the glass-sheet rigid container 100, underneath the same shoulder.

More specifically, the rectilinear bar 28 is substantially parallel to the vehicle longitudinal axis L and is thus movable parallel to the vehicle longitudinal axis L. Additionally, the rectilinear bar 28 has a length preferably comprised between 0,5 and 1,5 metres.

Preferably, each lateral prong 27 of gripping equipment 7 is moreover provided with a linear transducer (not shown in the figures) which is able to determine/measure the length ℓ of the segment of rectilinear bar 28 jutting out cantilevered from the front side of the transversal supporting beam 25.

Additionally, the gripping equipment 7 is preferably provided with an electronic control unit (not shown in the figures), which is preferably electronically connected to the linear transducers of the two movable lateral prongs 27, and is adapted to command the actuator devices 29 of the two movable lateral prongs 27, so as to adjust the length ℓ of the segment of the two rectilinear bars 28 that juts out cantilevered from the front side of the supporting beam 25, in automatic manner and/or based on the commands given directly by the operator.

Preferably, the electronic control unit of gripping equipment 7 is moreover electronically connected also to the linear transducer of supporting beam 25, and is adapted to command the actuator device that varies the length of the supporting beam 25, so as to vary, on command and at will, the distance between the two movable lateral prongs 27.

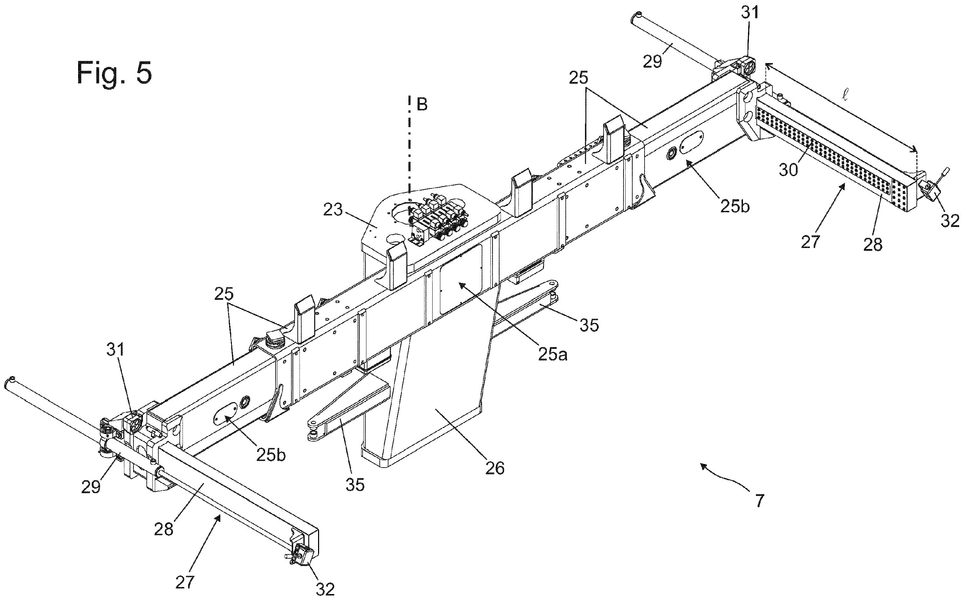

More specifically, with particular reference to Figures 4 and 5, each lateral prong 27 is preferably provided with a double-acting hydraulic cylinder 29 that is interposed between the transversal supporting beam 25 and the rectilinear bar 28, so as to be able to move the rectilinear bar 28 forwards and backwards parallel to its longitudinal axis.

The electronic control unit, in turn, is preferably adapted to control the inflow of pressurized fluid to the two hydraulic cylinders 29.

In the illustrated example, in particular, the/each hydraulic cylinder 29 is preferably substantially parallel to the longitudinal axis of the rectilinear bar 28, and is preferably located beside the rectilinear bar 28, preferably on the opposite side relative to the transversal supporting beam 25. Preferably, the/each hydraulic cylinder 29 moreover has the outer tubular barrel fixed in rigid manner to the end of the transversal supporting beam 25, and the movable piston-rod firmly fixed to the rectilinear bar 28.

With particular reference to Figures 4 and 5, moreover the rectilinear bar 28 of at least one and more conveniently both movable lateral prongs 27 is preferably provided with a ribbon-like insert 30 with a structure having a high friction coefficient, which is preferably made of tread plate, and is located on the inner side of the same rectilinear bar 28, so as to abut, in use, against the outer surface of the glass-sheet rigid container 100.

Alternatively, the ribbon-like insert 30 could also be made of vulcanised rubber or other similar elastomeric material, optionally with treaded profile.

With reference to Figures 1 and 5, in addition the gripping equipment 7 is preferably provided with at least one and more conveniently a pair of control cameras 31, which are located at the two ends of the transversal supporting beam 25, adjacent the two lateral prongs 27, and are each oriented/turned roughly towards the distal/front end of the rectilinear bar 28 of the corresponding prong 27. The camera (s) 31 allow the operator to see on one or more monitors of the driver's cab 9, whether the rectilinear bars 28 of the two lateral prongs 27 are sufficiently underneath the corresponding shoulders 102 and/or when the rectilinear bars 28 of the two lateral prongs 27 arrive in abutment against the shoulders 102, underneath the same shoulders 102.

Preferably, the gripping equipment 7 is moreover provided with at least one or more conveniently a pair of further control cameras 32 that are located at the front/free ends of the rectilinear bars 28 of the two prongs 27, and are oriented/pointed towards the area in front of the self-propelled vehicle 1. The camera(s) 32 allow the operator to see on one or more monitors of the driver's cab 9, the area in front of the vehicle when the glass-sheet rigid container(s) 100 is/are in abutment against the loading deck 4 of the supporting body 3.

Additionally or alternatively to the camera(s) 31 and/or 32, the gripping equipment 7 may moreover comprise also at least one and more conveniently a pair of lightings, which are placed at the two ends of the transversal supporting beam 25 and/or at the front/free ends of the two rectilinear bars 28, so as to light the area in front of the self-propelled vehicle 1.

With reference to Figures 4 and 5, preferably the adjustment assembly 24 of swivelling head 23 in turn comprises: a transversal rectilinear bar 33 that extends parallel to the two transversal cylindrical pins 22 of the main slide 20, i.e. parallel to direction d₂, and is inserted in axially slidable manner in the main slide 20, preferably between the two transversal cylindrical pins 22; and a pair of double-acting hydraulic cylinders 34, which are located on opposite sides of the transversal rectilinear bar 33, and each connect a corresponding end of the transversal rectilinear bar 33 with a rigid arm 35 that juts out cantilevered from the facing lateral side of the central plate-like element 26 of swivelling head 23.

Finally, the self-propelled vehicle 1 is preferably provided with a main electronic control apparatus (not shown in the figures), which is adapted to command the motors of the ground-resting wheels 2, the actuator assembly 6, the actuator assembly 8, and possibly the adjustment assembly 14, in automatic manner and/or on the basis of the commands given directly by the operator.

Preferably, the main electronic control apparatus is furthermore adapted to command one or more actuators of the gripping equipment 7, in automatic manner and/or on the basis of the commands given directly by the operator.

More in detail, the main electronic control apparatus is preferably adapted to command: the adjustment assembly that controls the misalignment of auxiliary slide 21 with respect to main slide 20; and/or the adjustment assembly 24 that controls the orientation/inclination of the swivelling head 23 with respect to the vehicle longitudinal axis L; and/or the electronic control unit that commands the actuator devices 29 of the two movable lateral prongs 27.

Clearly, the electronic control unit commanding the actuator devices 29 of the two movable lateral prongs 27 may also be incorporated into the main electronic control apparatus.

The general operation of the self-propelled vehicle 1 is easily inferable from what described above, and will be described below assuming that, initially, the vertical upright 5 is in the rearward position, approximately in the centre of the supporting body 3, and that the rectilinear bars 28 of the two movable lateral prongs 27 practically do not jut out cantilevered from the front side of supporting beam 25 (see Figure 3).

When having to fork a small group of glass-sheet rigid containers 100 closely adjoined to one another (three rigid containers 100 in the illustrated example), the driver places the self-propelled vehicle 1 in front of one of the larger faces of the package/group of glass-sheet rigid containers 100 to be handled, and then moves the vertical upright 5 at the outer edge of supporting body 3 (see Figures 2, 3 and 6), in the forward position, bringing more or less at same time the length of the transversal supporting beam 25 to a value which is sufficient for embracing with wide clearance the rigid container 100 (see Figure 5).

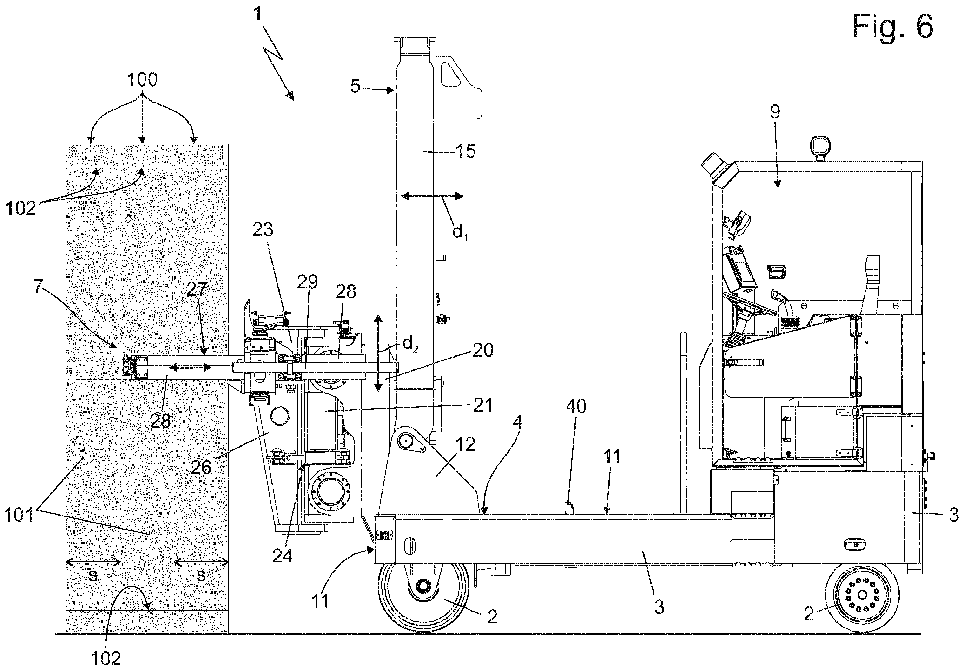

With reference to Figure 6, after having placed the vertical upright 5 at the outer edge of supporting body 3, the driver of the vehicle lowers the gripping equipment 7 so as to bring the swivelling head 23, and more specifically the transversal supporting beam 25 of the gripping equipment 7, flush with the larger face of the package/group of glass-sheet rigid containers 100 to be handled, approximately in the centre of the same face.

Subsequently, the driver of the vehicle sets the length of the two movable lateral prongs 27 of the gripping equipment 7, or more conveniently sets the number of glass-sheet rigid containers 100 to be forked simultaneously (three rigid containers 100 in the illustrated example), and the electronic control unit of gripping equipment 7 commands the actuator devices 29 of the two movable lateral prongs 27, so that the two rectilinear bars 28 move forwards up to jut out cantilevered from the front side of transversal supporting beam 25 for a segment of length ℓ sufficient for supporting the desired number of glass-sheet rigid containers 100.

More specifically, the length ℓ of the segment of the two rectilinear bars 28 jutting out cantilevered from the front side of transversal supporting beam 25, has to down approximate the sum of the thicknesses s of the glass-sheet rigid containers 100 that form the package to be handled.

Once completed the adjustment of the two movable lateral prongs 27 of gripping equipment 7, the driver of the vehicle reduces the length of the transversal supporting beam 25 up to bringing the two rectilinear bars 28 flush with the vertical sides of the glass-sheet rigid containers 100 that form the package to be handled, and then slowly lifts the entire gripping equipment 7 up to abutting the two rectilinear bars 28 underneath the protruding shoulders 102 of all the glass-sheet rigid containers 100 that form the package to be handled.

After having brought the two rectilinear bars 28 in abutment against the protruding shoulders 102 of all the glass-sheet rigid containers 100 forming the package to be handled, the driver of the vehicle lifts the gripping equipment 7 so as to bring the package of glass-sheet rigid containers 100 to be handled at a height from the ground slightly higher than that of the loading deck 4 of the supporting body 3, and then brings the vertical upright 5 back into the rearward position, placing the package of glass-sheet rigid containers 100 to be handled directly on top of the loading deck 4 of supporting body 3.

Optionally, a proximity sensor 40 preferably of retractable type located on the loading deck 4 of supporting body 3, is adapted to detect and signal to the driver when the package of glass-sheet rigid containers 100 forked by the gripping equipment 7 has reached a height from the ground higher than that of the loading deck 4.

Before bringing the vertical upright 5 back into the rearward position, the driver of the vehicle can moreover tilt the vertical upright 5 by some degrees backwards, so as to prevent the package of glass-sheet rigid containers 100 from accidentally slipping off the two movable lateral prongs 27 of the gripping equipment 7.

With reference to Figure 1, after having placed the package of glass-sheet rigid containers 100 directly on top of the loading deck 4 of supporting body 3, the driver of the vehicle slowly lowers the gripping equipment 7 so as to rest the package of glass-sheet rigid containers 100 to be handled on the loading deck 4 of supporting body 3.

Clearly, the lifting of the gripping equipment 7, the moving back of the vertical upright 5 and the following lowering of the gripping equipment 7 so as to rest the package of glass-sheet rigid containers 100 to be handled on the loading deck 4 of supporting body 3 may also be carried out in an automatic and autonomous manner by the electronic control apparatus of the self-propelled vehicle 1.

The advantages connected to the particular structure of the two lateral prongs 27 are remarkable.

First of all, operation of the self-propelled vehicle 1 is no longer limited by the length of the protruding prongs 27 of gripping equipment 7. The operator, in fact, can now extract the rectilinear bars 28 when he/she is already perfectly aligned with the larger face of the package of glass-sheet rigid containers 100 to be handled, thus preventing possible collisions of the bars 28 against any adjacent rigid containers 100 or glass sheets.

In addition, the operator can now select with extreme easiness the number or the total thickness of the glass-sheet rigid containers 100 to be forked simultaneously with the gripping equipment 7 of the self-propelled vehicle 1.

Furthermore, the adjustment of the length of the prongs 27 practically eliminates the risks of overturning of the self-propelled vehicle 1, because the glass-sheet rigid container(s) 100, during the lifting, always remain flush with the transversal supporting beam 25.

In addition, the arrangement of the camera(s) 32 on the front/free ends of the rectilinear bars 28 of the two movable prongs 27, widens the view of the driver of the vehicle in conditions of full load, remarkably simplifying the driving of the self-propelled vehicle 1 with the greater safety that this entails.

It is finally clear that modifications and variants may be made to the self-propelled vehicle 1, without thereby departing from the scope of the present invention.

For example, in a first less-sophisticated embodiment of gripping equipment 7, the swivelling head 23 could be fixed directly to the main slide 20 still with the capability of swivelling on command about the axis B. Clearly, in this variant the adjustment assembly 24 would be interposed between the main slide 20 and the swivelling head 23.

In a second less-sophisticated embodiment of gripping equipment 7, the transversal supporting beam 25 and the central plate-like element 26 could be fixed in rigid manner directly to the main slide 20, clearly without the capability of swivelling about axis B.

Finally, the gripping equipment 7 could lack the central plate-like element 26.

## Claims

1. A self-propelled vehicle (1) for handling glass-sheet rigid containers (100) comprising: a supporting body (3) which is provided with a plurality of ground-resting wheels (2); a vertical upright (5) which extends cantilevered from the supporting body (3) in a substantially vertical direction, and is firmly fixed to the supporting body (3) with the capability of moving horizontally over the supporting body (3) along a path that is substantially rectilinear and parallel to the vehicle longitudinal axis (L); a first actuator assembly (6) which is adapted to move, on command, the vertical upright (5) over the supporting body (3) from and towards a forward position in which the vertical upright (5) is located at the outer edge of the supporting body (3); a gripping equipment (7) which is adapted to fork one or more glass-sheet rigid containers (100) at a time, is fixed to the vertical upright (5) with the capability of moving along the same vertical upright (5), and juts out cantilevered outside of the vehicle when the vertical upright (5) is in the forward position; and a second actuator assembly (8) which is adapted to move, on command, the gripping equipment (7) along the vertical upright (5);
the gripping equipment (7) being provided with a transversal supporting beam (25) which is substantially horizontal and perpendicular to the vehicle longitudinal axis (L), and is adapted to be arranged flush with a larger face of the glass-sheet rigid container (100) to be transported; and two lateral prongs (27) that are arranged at the two ends of the transversal supporting beam (25), and are adapted to abut underneath protruding shoulders (102) located at the sides of the glass-sheet rigid container (100);
the self-propelled vehicle (1) being **characterised in that** each lateral prong (27) comprises: a rectilinear bar (20) of given length, which is separated and distinct from the transversal supporting beam (25), extends horizontally and perpendicularly to the transversal supporting beam (25), and is fixed in rigid manner to the end of said transversal supporting beam (25) with the capability of moving forwards and backwards parallel to its longitudinal axis; and a first actuator device (29) which is able to move, on command, the rectilinear bar (28) forwards and backwards relative to the end of the transversal supporting beam (25), so as to vary the length (ℓ) of the segment of the rectilinear bar (28) that protrudes cantilevered from the front side of the transversal supporting beam (25).

2. Self-propelled vehicle according to Claim 1, wherein each lateral prong (27) additionally comprises a linear transducer which is able to detect/measure the length (ℓ) of the segment of the rectilinear bar (28) that juts out cantilevered from the front side of the transversal supporting beam (25).

3. Self-propelled vehicle according to Claim 1 or 2, wherein the gripping equipment (7) additionally includes an electronic control unit adapted to command the actuator devices (29) of the two lateral prongs (27).

4. Self-propelled vehicle according to Claim 1, 2 or 3, wherein the rectilinear bar (28) of at least one of said lateral prongs (27) is provided with a ribbon-like insert with a structure having a high friction coefficient (30), which is located on the inner side of the same rectilinear bar (28) so as to be able to abut against the outer surface of the glass-sheet rigid container (100).

5. Self-propelled vehicle according to any one of the preceding claims, wherein the transversal supporting beam (25) has a length-adjustable structure so as to be able to vary the distance between the two lateral prongs (27), and the gripping equipment (7) moreover comprises a second actuator device which is able to vary, on command, the length of said transversal supporting beam (25).

6. Self-propelled vehicle according to Claim 5, wherein the transversal supporting beam (25) comprises: a rectilinear central segment (25a) adjacent to and aligned with said vertical upright (5); and two rectilinear lateral segments (25b) which are inserted in angularly rigid and axially slidable manner into the two ends of the rectilinear central segment (25a), so as to jut out cantilevered from the two sides of the vertical upright (5), and support each a respective lateral prong (27).

7. Self-propelled vehicle according to Claim 5 or 6, wherein the gripping equipment (7) additionally includes a second linear transducer adapted to detect/measure the length of the transversal supporting beam (25).

8. Self-propelled vehicle according to any one of the preceding claims, wherein the gripping equipment (7) additionally comprises a central plate-like element (26) which is located beside the central part of the transversal supporting beam (25).

9. Self-propelled vehicle according to any one of the preceding claims, wherein the gripping equipment (7) comprises a main slide (20) which is fixed to the vertical upright (5) with the capability of sliding along the vertical upright (5) parallel to the upright longitudinal axis; the second actuator assembly (8) being adapted to move said main slide (20) along the vertical upright (5).

10. Self-propelled vehicle according to Claim 9, wherein the gripping equipment (7) additionally comprises:
an auxiliary slide (21) which is firmly fixed to the main slide (20) with the capability of sliding along said main slide (20) in a direction (d3) substantially horizontal and perpendicular to the vehicle longitudinal axis (L); and a first adjustment assembly which is adapted to vary the position of the auxiliary slide (21) along the main slide (20) .

11. Self-propelled vehicle according to Claim 9 or 10, wherein the gripping equipment (7) additionally comprises:
a swivelling head (23) which is firmly fixed to the main slide (20) or to the auxiliary slide (21) with the capability of swivelling relative to the slide about a first reference axis (B) substantially parallel to the longitudinal axis of the vertical upright (5); and a second adjustment assembly (24) which is adapted to rotate the swivelling head (23) by a few degrees about said first reference axis (B); the transversal supporting beam (25) being fixed on said swivelling head (23).

12. Self-propelled vehicle according to any one of the preceding claims, wherein the gripping equipment (7) additionally comprises at least a first camera (32) and/or a lighting which is placed at the front/free end of the rectilinear bar (28) of one of the two lateral prongs (27).

13. Self-propelled vehicle according to any one of the preceding claims, wherein the gripping equipment (7) additionally comprises a pair of second cameras (31) located on the two ends of the transversal supporting beam (25); said second cameras (31) being turned towards the front/free end of the rectilinear bar (28) of the corresponding lateral prong (27).

14. Self-propelled vehicle according to any one of the preceding claims, wherein the supporting body (3) is superiorly provided with a substantially horizontal loading deck (4), on which the glass-sheet rigid containers (100) temporarily rest during transport; the vertical upright (5) being movable along the supporting body (3) from one side to the other of the loading deck (4) along a rectilinear path that crosses said loading deck (4).

15. Self-propelled vehicle according to any one of the preceding claims, wherein the front part of the supporting body (3) is provided with two protruding rectilinear beams (11) that extend cantilevered substantially parallel to the ground, one spaced beside the other on opposite sides of and substantially parallel to said vehicle longitudinal axis (L).

16. Self-propelled vehicle according to Claim 15, wherein the loading deck (4) of the supporting body (3) is located on the front/distal ends of the two protruding rectilinear beams (11) .

17. Self-propelled vehicle according to Claim 15 or 16, wherein the vertical upright (5) is butt fixed to a movable slide (12) that is mounted in slidable manner on the two protruding rectilinear beams (11) of the supporting body (3) so as to be able to move parallel to the vehicle longitudinal axis (L) .

18. Self-propelled vehicle according to Claim 17, wherein the vertical upright (5) is pivoted on said movable slide (12) so as to be able to rotate about a reference axis (A) substantially horizontal and perpendicular to the vehicle longitudinal axis (L); the self-propelled vehicle (1) being moreover provided with a third adjustment assembly (14) adapted to vary/adjust the inclination angle of the vertical upright (5) with respect to the vertical.
